# EUROPEAN PATENT APPLICATION

(11) **EP 4 106 336 A1**
(43) Date of publication of application: **21.12.2022**
(21) Application number: 21207907.3
(22) Date of filing: 12.11.2021
(51) Int. Cl.: H04N 21/422, H04N 21/4223, H04N 21/431, H04N 21/441, H04N 21/442, H04N 21/45, H04N 21/485

(54) **MODE SWITCHING METHOD AND DISPLAY APPARATUS**

(30) Priority: 18.06.2021 CN 202110676090
(71) Applicant: BenQ Corporation, Taipei 114 (TW)
(72) Inventor: Wu, Li-Hsin, 114 Taipei (TW); Chen, Wei-Chen, 114 Taipei (TW); Wu, Cheng-En, 114 Taipei (TW); Yang, Hui-Chun, 114 Taipei (TW); Hsu, Wei-Chung, 114 Taipei (TW); He, Jheng-Ru, 114 Taipei (TW); Kuo, En-Ming, 114 Taipei (TW)
(74) Representative: Straus, Alexander

(57) **Abstract**

A mode switching method is applied to a display apparatus (10) with a first scenario mode and a second scenario mode. The first scenario mode provides a first shortcut menu, and the second scenario mode provides a second shortcut menu different from the first shortcut menu. The mode switching method includes receiving a first signal source of a first external device (12), analyzing the first signal source to determine the first external device (12) is matched with the first scenario mode or the second scenario mode, and displaying the first shortcut menu on a display interface (16) of the display apparatus (10) and hiding the second shortcut menu when the first external device (12) is matched with the first scenario mode.

## Description

### Field of the Invention

The present invention relates to a mode switching method having an automatic mode switching function and a related display apparatus according to the pre-characterizing clauses of claims 1 and 8.

### Background of the Invention

With the advanced technology, the liquid crystal display television can connect to the Internet for receiving an image stream, and further can connect to the video game console and the personal computer for entertainment and working process. Generally, the television may be switched into a vocal enhancement mode and a movie mode when a user watches the image stream on the television, and the television may be switched into a heavy bass mode when the user plays the video game console via the television, and the television may be switched into an eye protection mode when the television is connected to the personal computer. However, the conventional television cannot identify a connected external device belongs to the video game console or the Internet set-top box or the personal computer; the user has to manually adjust the sound parameter, the illumination parameter and the image parameter of the television for a scenario mode suitable for the external device. The user must reset several troublesome parameters whenever the conventional television is connected to the unknown external device, even though the video game console, the Internet set-top box and the personal computer were connected before. Thus, design of a display apparatus capable of automatically switching into a proper mode is an important issue in the display industry.

### Summary of the Invention

This in mind, the present invention aims at providing a mode switching method having an automatic mode switching function and a related display apparatus for solving above drawbacks.

This is achieved by a mode switching method and a related display apparatus according to claims 1 and 8. The dependent claims pertain to corresponding further developments and improvements.

As will be seen more clearly from the detailed description following below, the claimed mode switching method is applied to a display apparatus with a first scenario mode and a second scenario mode. The first scenario mode provides a first shortcut menu, and the second scenario mode provides a second shortcut menu different from the first shortcut menu. The mode switching method includes receiving a first signal source from a first external device, analyzing the first signal source to determine the first external device is matched with the first scenario mode or the second scenario mode, and displaying the first shortcut menu on a display interface of the display apparatus and hiding the second shortcut menu when the first external device is matched with the first scenario mode.

### Brief Description of the Drawings

In the following, the invention is further illustrated by way of example, taking reference to the accompanying drawings. Thereof:
FIG. 1 is a functional block diagram of a display apparatus according to an embodiment of the present invention;
FIG. 2 is a schematic diagram of the display apparatus and a first external device according to the embodiment of the present invention;
FIG. 3 is a diagram of the first external devices and matched scenario modes according to the embodiment of the present invention;
FIG. 4 is a diagram of the display apparatus in other application according to the embodiment of the present invention; and
FIG. 5 is a flow chart of a mode switching method according to the embodiment of the present invention.

### Detailed Description

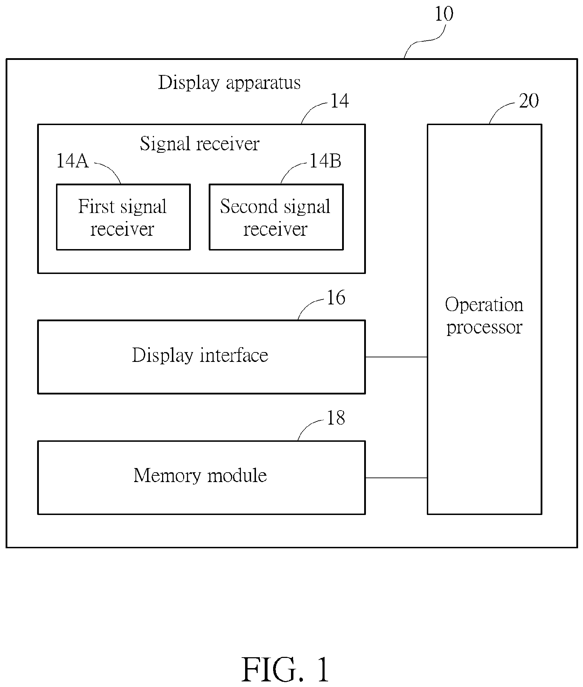

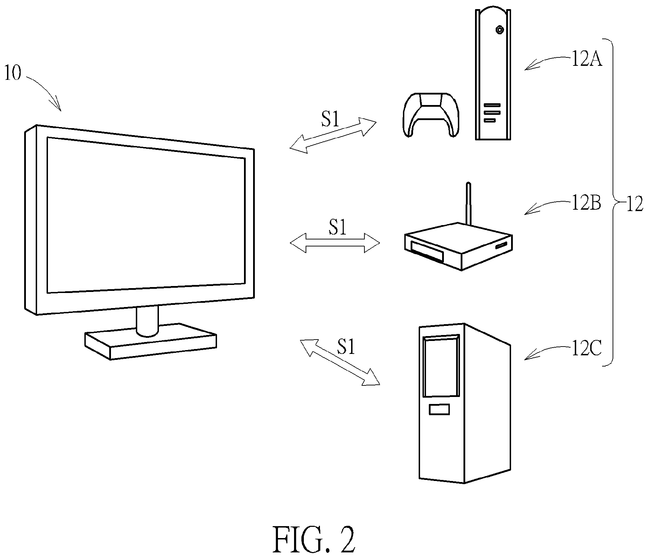

Please refer to FIG. 1 and FIG. 2. FIG. 1 is a functional block diagram of a display apparatus 10 according to an embodiment of the present invention. FIG. 2 is a schematic diagram of the display apparatus 10 and a first external device 12 according to the embodiment of the present invention. The display apparatus 10 can include a signal receiver 14, a display interface 16, a memory module 18 and an operation processor 20. The signal receiver 14 can be a high definition multimedia interface (HDMI) connector, and a type of the signal receiver 14 can depend on a demand of the display apparatus 10. The display apparatus 10 can be a liquid crystal display (LCD) television or a projector, and can be connected to the first external device 12 via the signal receiver 14 in a detachable manner. The first external device 12 can be the video game console 12A, the Internet set-top box 12B or the personal computer 12C in accordance with the user's demand; a type of the first external device 12 is not limited to the above-mentioned embodiments, and depends on an actual demand.

The display interface 16 can be the LCD panel or the projection lens of the display apparatus 10; any component capable of transforming video content of the display apparatus 10 into an image frame for being watched by the user belongs to a scope of the display interface 16 in the present invention. The memory module 18 may be the flash memory, the dynamic random access memory, or any available memory. The memory module 18 can store a plurality of scenario modes, which is respectively matched with different types of the first external device 12. Each scenario mode can provide a shortcut menu different from ones of other scenario modes, and each shortcut menu can have parameter assembly different from ones of other shortcut menus. The operation processor 20 can be electrically connected to the signal receiver 14, the display interface 16 and the memory module 18. The operation processor 20 can analyze the type of the first external device 12 via signals from the signal receiver 14, to automatically select and switch the matched scenario mode and the matched parameter assembly on the display interface 16, so that the display apparatus 10 can provide the preferred audiovisual experience suitable for the type of the first external device 12.

In the embodiment, the memory module 18 can include three scenario modes, such as a first scenario mode for the video game console 12A, a second scenario mode for the Internet set-top box 12B, and a third scenario mode for the personal computer 12C. A number and an applied condition of the scenario mode are not limited to the above-mentioned embodiment, which depend on the design demand. The shortcut menu may include a parameter assembly at least having a sound parameter, an illumination parameter and an image parameter; the display apparatus 10 may optionally provide other types of the parameters and the related parameter assembly, and a detailed description is omitted herein for simplicity. The sound parameter may be interpreted as sound volume and effect of the speaker. The illumination parameter may be interpreted as decorative effect of the screen light on the display apparatus 10. The image parameter may be interpreted as visual effect of the display interface 16, such as color gamut or image quality.

It should be mentioned that the display apparatus 10 may include one or more signal receivers 14. If the display apparatus 10 has one signal receiver 14, the signal receiver 14 can receive a first signal source S1 when the first external device 12 is manually connected to the display apparatus 10, and the operation processor 20 can identify a marking label contained by the first signal source S 1 belongs to a first marking label of the first scenario mode, or a second marking label of the second scenario mode, or a third marking label of the third scenario mode, so as to decide the first external device 12 is the video game console 12A, or the Internet set-top box 12B, or the personal computer 12C. If the display apparatus 10 has several signal receivers 14, such as the first signal receiver 14A and the second signal receiver 14B, the signal receivers 14 are used to respectively connect with different types of the first external devices 12; the operation processor 20 can identify the first signal source S1 is transmitted from the signal receiver 14A or 14B, and decide the first external device 12 which provides the first signal source S1 belongs to the video game console 12A, the Internet set-top box 12B or the personal computer 12C.

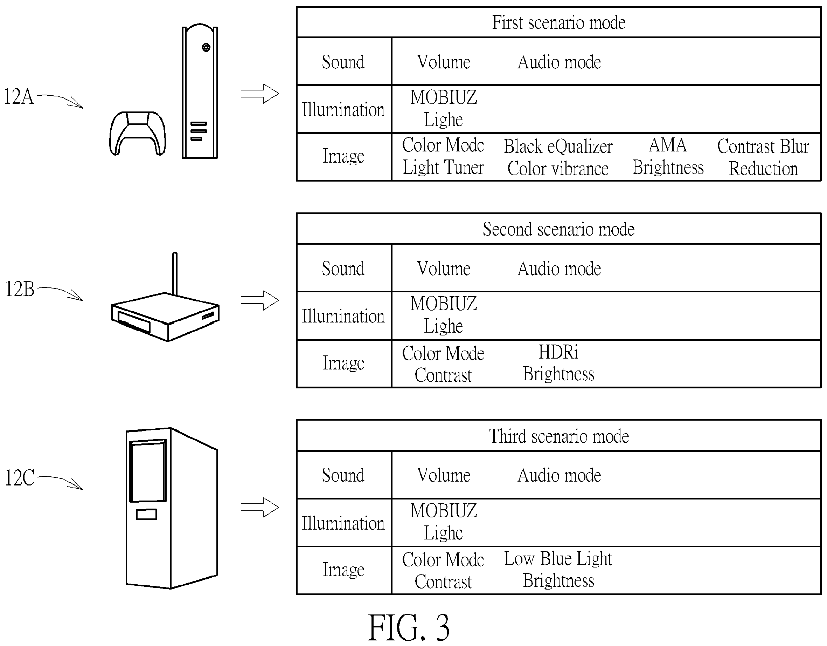

Please refer to FIG. 3. FIG. 3 is a diagram of the first external devices 12 and matched scenario modes according to the embodiment of the present invention. For example, in the first shortcut menu of the first scenario mode (such as the game mode), the sound parameter may be a high volume mode with heavy bass, and the illumination parameter may be a scintillating mode that an intensity and color of the screen light are rapidly changed, and the image parameter may be relevant setting for the game mode; the aforesaid three parameters can be defined as first parameter assembly. In the second shortcut menu of the second scenario mode (such as the movie mode), the sound parameter may be a multichannel mode of vocal enhancement, and the illumination parameter may be a flow mode that the intensity and the color of the screen light are slowly changed, and the image parameter may be relevant setting for the movie mode; the aforesaid three parameters can be defined as second parameter assembly. In the third shortcut menu of the third scenario mode (such as the working mode), the sound parameter may be a low volume mode, and the illumination parameter may be a shutdown mode or a decoration mode that the intensity of the screen light is slightly changed, and the image parameter may be an eye protection mode with low blue light; the aforesaid three parameters can be defined as third parameter assembly.

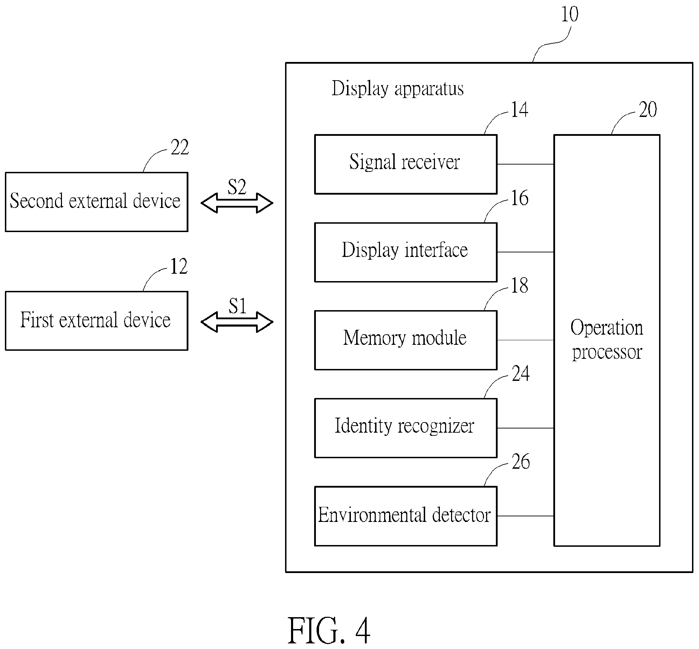

Please refer to FIG. 4. FIG. 4 is a diagram of the display apparatus 10 in other application according to the embodiment of the present invention. The display apparatus 10 can be further electrically connected to a second external device 22 via other signal receiver (which is not shown in the figures). The second external device 22 can be an external speaker or an external decorative light bar. The operation processor 20 can determine whether the foresaid signal receiver is connected to the second external device 22; if the foresaid signal receiver and the second external device 22 are connected, the operation processor 20 can analyze a second signal source S2 from the second external device 22, to decide whether the scenario mode selected by the first external device 12 provides a specific shortcut menu relevant to the second external device 22. For example, if the display apparatus 10 is connected to the video game console 12A (which means the first external device 12) and the external speaker (which means the second external device 22), the first scenario mode (which means the game mode) of the video game console 12A can provide the specific shortcut menu applied for the external speaker, and the specific shortcut menu and the first shortcut menu of the first scenario mode can be simultaneously displayed on the display interface 16; in the situation, the specific shortcut menu may be predefined as having a spatial sound mode with the heavy bass for improving the audiovisual experience in the game mode. Thus, the display apparatus 10 can immediately identify whether connection with the second external device 22 is established, and automatically adjust the parameter setting of the second external device 22 in accordance with the specific shortcut menu.

If the scenario mode and related parameter setting in the shortcut menu selected by the first external device 12 have some predefined parameters relevant to the second external device 22, the foresaid predefined parameters can be used to both adjust functions (which are related to the predefined parameter) of the display apparatus 10 and the second external device 22. For example, if the display apparatus 10 is connected to the video game console 12A and the second external device 22 is the external speaker, the sound parameter of the first shortcut menu in the first scenario mode (which means the game mode) can be used to adjust the sound signal of the second external device 22 and the built-in speaker of the display apparatus 10; if the second external device 22 is the external decorative light bar, the illumination parameter of the first shortcut menu can be used to adjust the illumination signal of the second external device 22 and the screen light of the display apparatus 10.

Besides, the display apparatus 10 may optionally include an identity recognizer 24, and the memory module 18 may store a plurality of user parameter assemblies for different user identities. The identity recognizer 24 can be an image sensor, a sound sensor or a barcode scanner used to acquire the identification signal. The operation processor 20 can recognize the user identity in accordance with an image identification result, or a sound identification result, or a barcode identification result. For example, the image sensor may face toward a front of the display apparatus 10 to acquire a surveillance image as being the identification signal, and then human face recognition technology can be used to determine the user identity inside the surveillance image, so as to match the determined user identity with the plurality of user parameter assemblies for finding out whether the determined user identity has a predefined user parameter assembly; if so, the predefined user parameter assembly can be automatically applied in accordance with the type and the scenario mode of the first external device 12.

For example, the user parameter assembly of the user A in the first scenario mode (such as the game mode) may set the sound parameter as the heavy bass mode, and the user parameter assembly of the user B in the first scenario mode (such as the game mode) may set the sound parameter as the mid bass mode. If the video game console 12A is connected to the display apparatus 10, the display apparatus 10 can determine the first scenario mode is applicable and display the first shortcut menu on the display interface 16; then, the display apparatus 10 further can analyze the identification result of the identity recognizer 24, to activate the game mode with the heavy bass mode when the user A stands before the display apparatus 10, or to activate the game mode with the mid bass mode when the user B stands before the display apparatus 10.

The identity recognizer 24 may have the limited surveillance range, and can detect a distance of the user relative to the display apparatus 10. Therefore, the display apparatus 10 of the present invention can further determine whether the user identity is located within an effective operation range of the display apparatus 10. If the user identity is located inside the effective operation range, the identified user is represented as an operator of the display apparatus 10, and the display apparatus 10 can determine whether the user identity related to the identified user is mated with any of the plurality of user parameter assemblies. That is to say, if the identity recognizer 24 recognizes the user A and the user B both standing before the display apparatus 10, but the user A is located within the effective operation range rather than the user B, or the users A and B both stand inside the effective operation range but the user A is more close to the display apparatus 10, the first shortcut menu and the first parameter assembly belonging to the user A can be applied for the display apparatus 10.

Moreover, the display apparatus 10 may optionally include an environmental detector 26, and the memory module 18 may store a plurality of environmental calibration parameters for some or all of the scenario modes. The environmental detector 26 may be an ambient light sensor disposed on a top side or a lateral side of the display apparatus 10, and adapted to acquire illumination information around the display apparatus 10. The display apparatus 10 can analyze a detection signal generated by the environmental detector 26 to acquire an environmental condition around the display apparatus 10, and compare the environmental condition with a condition threshold for executing related parameter calibration in accordance with a comparison result. The memory module 18 mat pre-store one or some condition thresholds, and each of the condition thresholds may have a specific environmental calibration parameter; if the environmental condition conforms to one of the condition thresholds, the environmental calibration parameter which corresponds to the conformed condition threshold can be used to adjust the parameter setting of the display apparatus 10.

For example, if the environmental intensity is low, the environmental condition acquired by the environmental detector 26 may conform to a low-illumination condition threshold (which may be interpreted as the environmental condition is equal to or smaller than the condition threshold), and thus the low-illumination condition threshold can provide the corresponding environmental calibration parameter used to adjust one or some image parameters of the display apparatus 10 in the current scenario mode, such as increasing an image contrast to ensure visibility of the image detail. If the environmental intensity is high, the environmental condition acquired by the environmental detector 26 may conform to a high-illumination condition threshold (which may be interpreted as the environmental condition is equal to or higher than another condition threshold), and thus the environmental calibration parameter of the high-illumination condition threshold can adjust the display apparatus 10, such as preventing the image from overexposure to maintain the preferred audiovisual experience. Analysis of the detection signal is not limited to acquirement of the environmental intensity around the display apparatus 10, and the detection signal may be represented as the environmental color temperature or any other datum, which depends on the design demand.

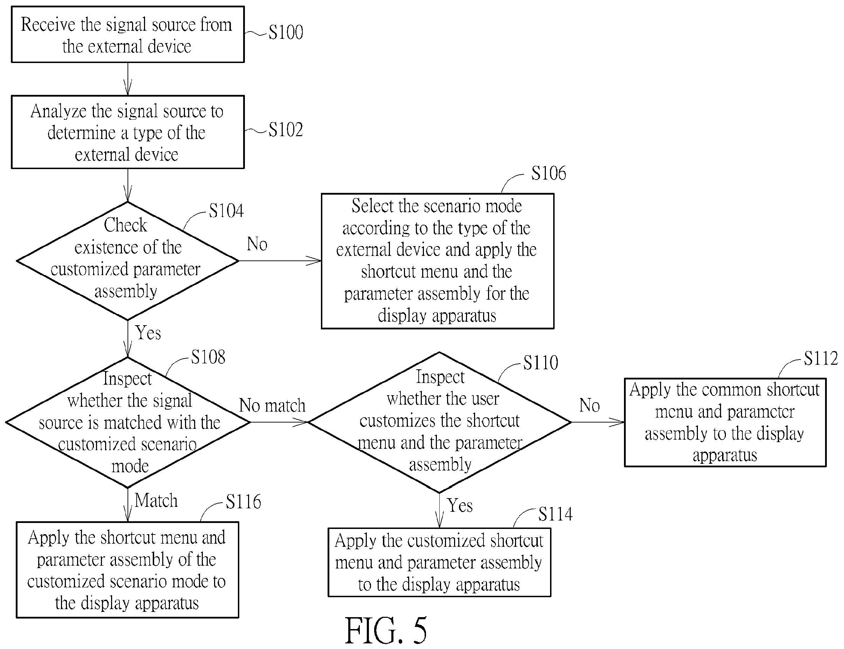

Please refer to FIG. 2 and FIG. 5. FIG. 5 is a flow chart of a mode switching method according to the embodiment of the present invention. The mode switching method illustrated in FIG. 5 is suitable for the display apparatus 10 shown in FIG. 1 to FIG. 4. First, the mode switching method can execute step S100 and step S 102 to receive the first signal source S1 from the first external device 12 via the signal receiver 14, and analyze the first signal source S1 for determining whether the first external device 12 belongs to one of the video game console 12A, the Internet set-top box 12B and the personal computer 12C. As the type of the first external device 12 is confirmed, step S104 can be executed to check whether a customized scenario mode by the user is existed; if the customized scenario mode is not existed, step S106 can be executed to select the scenario mode predefined by the system in accordance with the type of the first external device 12, and optionally display the shortcut menu and the parameter assembly relevant to the predefined scenario mode on the display interface 16; the user can watch information of the scenario mode and the shortcut menu and the parameter assembly on the display interface 16 for further adjustment. The scenario modes, the shortcut menus and the parameter assemblies which are irrelevant to the determined type of the first external device 12 are not displayed and not applied for the display apparatus 10.

If the customized scenario mode is existed, the display apparatus 10 may store one or some mode setting data in accordance with the user's habit or historic recording; then, step S108 can be executed to inspect whether the first signal source S1 acquired by the signal receiver 14 is matched with the customized scenario mode; the foresaid step can be interpreted as determining whether matching inspection of the scenario mode is actuated. If the matching inspection is not actuated, step S110 can be executed to inspect whether the user customizes or changes the shortcut menu and the related parameter assembly. If there has no customized or changed recording, step S112 can be executed to apply the common shortcut menu and the common parameter assembly for the display apparatus 10 in accordance with the historic recording; if there has the customized or changed recording, step S114 can be executed to apply the customized or changed shortcut menu and the related parameter assembly for the display apparatus 10.

If the matching inspection of the scenario mode is actuated via execution of step S108, step S116 can be executed to determine whether the scenario mode customized by the user belongs to the first scenario mode (such as the game mode), or the second scenario mode (such as the movie mode), or the third scenario mode (such as the working mode), and apply the shortcut menu and the parameter assembly corresponding to the customized scenario mode for the display apparatus 10; other unrelated scenario modes, unrelated shortcut menus and unrelated parameter assemblies are not displayed and not applied for the display apparatus 10.

Therefore, when the mode switching method of the present invention determines that the memory module 18 of the display apparatus 10 does not have the customized scenario mode, the systematically predefined scenario mode can be applied directly; when the memory module 18 has the customized scenario mode, the present invention can further determine whether the signal source from the external device is matched with the customized scenario mode (in step S108). If the signal source cannot be matched with the customized scenario mode, the mode switching method can inspect whether the user intends to reset or change the shortcut menu and the parameter assembly (in step S 110), so as to decide whether to select the common shortcut menu and the related parameter assembly via the historic recording, or to apply the customized scenario mode and the related shortcut menu and the related parameter assembly for the display apparatus 10 (in step S 112 and step S 114); if the signal source can be matched with the customized scenario mode, the predefined scenario mode can be directly applied for the display apparatus 10 (in step S116).

Moreover, the user who is authorized to operate the display apparatus 10 may be plural, so that the mode switching method of the present invention may utilize the identity recognizer 24 to recognize the user identity between step S102 and step S104, and then can decide whether the memory module 18 stores the customized parameter assembly in accordance with the user identity. The identity recognizer 24 may recognize the user identity via the human face identification technology, body shape identification technology, human gesture identification technology, or sound identification technology. In addition, the display apparatus 10 can optionally analyze information from the environmental detector 26 when executing the mode switching method of the present invention to select or check the shortcut menu and the parameter assembly, so as to adaptively adjust the related parameters of the display apparatus 10 for the preferred audiovisual experience.

In conclusion, the mode switching method and the display apparatus of the present invention can provide a quick switching function. The mode switching method can automatically identify content of the signal source from the external device and automatically actuate the scenario mode corresponding to the external device when the external device is connected to the display apparatus; which means the display apparatus can memorize setting of several types of the external device in different scenario modes, and t can be simultaneously applied by the related shortcut menu and the related parameter assembly when being connected to the external device, without extra manual adjustment. In operation process of the display apparatus, the mode switching method can immediately record shortcut options of the shortcut menu and parameter values of the parameter assembly which are manually adjusted by the user in each scenario mode; if the display apparatus is connected to the same type of the external device again, the adjusted shortcut menu and the adjusted parameter assembly in each scenario mode can be automatically imported for simplifying and reducing the complicated parameter adjustment.

## Claims

1. A mode switching method applied to a display apparatus (10) with a first scenario mode and a second scenario mode, the first scenario mode providing a first shortcut menu, and the second scenario mode providing a second shortcut menu different from the first shortcut menu, **characterized in that** the mode switching method comprises:
receiving a first signal source from a first external device (12);
analyzing the first signal source to determine the first external device (12) is matched with the first scenario mode or the second scenario mode; and
displaying the first shortcut menu on a display interface (16) of the display apparatus (10) and hiding the second shortcut menu when the first external device (12) is matched with the first scenario mode.

2. The mode switching method of claim 1, **characterized in that** the first scenario mode has a first parameter assembly, the second scenario mode has a second parameter assembly different from the first parameter assembly, the mode switching method utilizes the first parameter assembly to adjust the display apparatus (10) and displays the first parameter assembly on the display interface (16) via the first shortcut menu when the first external device (12) is matched with the first scenario mode.

3. The mode switching method of claim 1, **characterized in that** the display apparatus (10) comprises a first signal receiver (14A) and a second signal receiver (14B) respectively matched with the first scenario mode and the second scenario mode, analyzing the first signal source comprises:
determining the first signal source is transmitted from the first signal receiver (14A) or the second signal receiver (14B); and
deciding the first external device (12) is matched with the first scenario mode when the first signal source is transmitted from the first signal receiver (14A).

4. The mode switching method of claim 1, **characterized in that** the first scenario mode and the second scenario mode are respectively matched with a first marking label and a second marking label, analyzing the first signal source comprises:
determining a marking label contained by the first signal source belongs to the first marking label or the second marking label; and
deciding the first external device (12) is matched with the first scenario mode when the marking label belongs to the first marking label.

5. The mode switching method of claim 1, **characterized in that** the display apparatus (10) is further electrically connected to a second external device (22), the mode switching method further comprises:
receiving a second signal source from the second external device (22);
analyzing the second signal source to determine whether the first scenario mode provides a specific shortcut menu relevant to the second external device (22); and
deciding whether to display the specific shortcut menu on the display interface (16) according to a determination result;
wherein a sound signal or an illumination signal provided by the second external device (22) is adjusted via a predefined parameter of the first scenario mode.

6. The mode switching method of claim 1, **characterized in that** the display apparatus (10) further comprises an identity recognizer (24) and stores a plurality of user parameter assemblies in the first scenario mode, the mode switching method comprises:
analyzing an identification signal from the identity recognizer (24);
determining whether a user identity acquired by the identification signal is matched with one user parameter assembly of the plurality of user parameter assemblies according to an analysis result;
determining whether the user identity is located within an effective operation range of the display apparatus (10); and
utilizing the user parameter assembly to adjust the display apparatus (10) and displaying the user parameter assembly on the display interface (16) via the first shortcut menu when the user identity is located within the effective operation range and the user identity is matched with the user parameter assembly;
wherein an image identification result or a sound identification result of the identification signal is analyzed to determine the user identity.

7. The mode switching method of claim 1, **characterized in that** the display apparatus (10) further comprises an environmental detector (26) and stores a plurality of environmental calibration parameters in the first scenario mode respectively corresponding to a plurality of condition thresholds, the mode switching method further comprises:
analyzing a detection signal from the environmental detector (26) to acquire an environmental condition around the display apparatus (10);
determining whether the acquired environmental condition conforms to one condition threshold of the plurality of condition thresholds; and
utilizing an environmental calibration parameter relevant to the condition threshold to adjust the display apparatus (10) when the acquired environmental condition conforms to the condition threshold;
wherein the detection signal is analyzed to compute an environmental intensity or an environmental color temperature around the display apparatus (10).

8. A display apparatus (10) with an automatic mode switching function, **characterized in that** the display apparatus (10) comprises:
at least one signal receiver (14) adapted to connect with a first external device (12) in a detachable manner;
a display interface (16);
a memory module (18) adapted to store a first scenario mode providing a first shortcut menu, and a second scenario mode providing a second shortcut menu different from the first shortcut menu; and
an operation processor (20) electrically connected to the at least one signal receiver (14), the display interface (16) and the memory module (18), the operation processor (20) being adapted to analyze a first signal source from the first external device (12) received by the at least one signal receiver (14) for determining the first external device (12) is matched with the first scenario mode or the second scenario mode, and display the first shortcut menu on the display interface (16) and hide the second shortcut menu when the first external device (12) is matched with the first scenario mode.

9. The display apparatus (10) of claim 8, **characterized in that** the first scenario mode has a first parameter assembly, the second scenario mode has a second parameter assembly different from the first parameter assembly, the operation processor (20) is further adapted to utilize the first parameter assembly for adjusting the display apparatus (10) and display the first parameter assembly on the display interface (16) via the first shortcut menu when the first external device (12) is matched with the first scenario mode.

10. The display apparatus (10) of claim 8, **characterized in that** the display apparatus (10) comprises a first signal receiver (14A) and a second signal receiver (14B) respectively matched with the first scenario mode and the second scenario mode, the operation processor (20) is further adapted to determine the first signal source is transmitted from the first signal receiver (14A) or the second signal receiver (14B), and decide the first external device (12) is matched with the first scenario mode when the first signal source is transmitted from the first signal receiver (14A).

11. The display apparatus (10) of claim 8, **characterized in that** the first scenario mode and the second scenario mode are respectively matched with a first marking label and a second marking label, the operation processor (20) is further adapted to determine a marking label contained by the first signal source belongs to the first marking label or the second marking label, and decide the first external device (12) is matched with the first scenario mode when the marking label belongs to the first marking label.

12. The display apparatus (10) of claim 8, **characterized in that** the display apparatus (10) is further electrically connected to a second external device (22), the operation processor (20) is further adapted to receive a second signal source from the second external device (22), analyze the second signal source to determine whether the first scenario mode provides a specific shortcut menu relevant to the second external device (22), and decide whether to display the specific shortcut menu on the display interface (16) according to a determination result, and therefore a sound signal or an illumination signal provided by the second external device (22) is adjusted via a predefined parameter of the first scenario mode.

13. The display apparatus (10) of claim 8, **characterized in that** the display apparatus (10) further comprises an identity recognizer (24) and stores a plurality of user parameter assemblies in the first scenario mode, the operation processor (20) is further adapted to analyze an identification signal from the identity recognizer (24), determine whether a user identity acquired by the identification signal is matched with one user parameter assembly of the plurality of user parameter assemblies according to an analysis result, and utilize the user parameter assembly to adjust the display apparatus (10) and displaying the user parameter assembly on the display interface (16) via the first shortcut menu when the user identity is matched with the user parameter assembly.

14. The display apparatus (10) of claim 13, **characterized in that** the operation processor (20) is further adapted to determine whether the user identity is located within an effective operation range of the display apparatus (10), and determine whether the user identity is matched with the user parameter assembly when the user identity is located within the effective operation range, and therefore an image identification result or a sound identification result of the identification signal is analyzed to determine the user identity.

15. The display apparatus (10) of claim 8, **characterized in that** the display apparatus (10) further comprises an environmental detector (26) and stores a plurality of environmental calibration parameters in the first scenario mode respectively corresponding to a plurality of condition thresholds, the operation processor (20) is further adapted to analyze a detection signal from the environmental detector (26) to acquire an environmental condition around the display apparatus (10), determine whether the acquired environmental condition conforms to one condition threshold of the plurality of condition thresholds, and utilize an environmental calibration parameter relevant to the condition threshold to adjust the display apparatus (10) when the acquired environmental condition conforms to the condition threshold, and the detection signal is analyzed to compute an environmental intensity or an environmental color temperature around the display apparatus (10).
